# EUROPEAN PATENT APPLICATION

(11) **EP 4 556 246 A1**
(43) Date of publication of application: **21.05.2025**
(21) Application number: 24196721.5
(22) Date of filing: 27.08.2024
(51) Int. Cl.: B41J 3/407, B64C 21/10

(54) **METHOD FOR DIRECTLY APPLYING SURFACE TEXTURE FOR IMPROVED AERODYNAMICS USING INKJET PRINTERS**

(30) Priority: 17.11.2023 US 202318513469
(71) Applicant: The Boeing Company, Arlington, VA 22202 (US)
(72) Inventor: LARSON-SMITH, Kjersta Lynn, ARLINGTON, 22202 (US); ARTHUR, Shane Edward, ARLINGTON, 22202 (US); GREENE, Edward Ryan, ARLINGTON, 22202 (US); MELLIN, Matthew H., ARLINGTON, 22202 (US)
(74) Representative: Plasseraud IP

(57) **Abstract**

A method for directly applying surface texture on the surface of a part to reduce drag is provided. The method comprises defining a geometry of the surface texture on the surface of the part and generating paths for inkjet printers to move over the surface of the part. The method comprises determining the number of passes and firing schedules for the inkjet printers to create the surface texture. The method comprises locating and aligning the part in a work cell. The method comprises depositing fluid droplets by the inkjet printers onto the surface to create the surface texture.

## Description

### BACKGROUND

### Field

The disclosure relates generally to surface modification techniques, and more specifically to a method for directly applying surface texture using inkjet printers.

### Description of the Related Art

Surface modification techniques are used to manipulate the flow of fluids (e.g., air or water) over a solid surface of an object to minimize friction and drag, ultimately improving the efficiency and performance of the object. One surface modification technique involves introducing textures or patterns to the solid surface in a way that alters the interaction between the fluid and the solid surface. By creating textures or patterns on the surface, the effective contact area between the fluid and the solid is reduced. This reduction in contact area decreases the frictional forces experienced by the object moving through the fluid. The textures or patterns on the surface disrupt the laminar flow of the fluid. This disruption effectively reduces skin friction, a significant source of drag in fluid dynamics, leading to improved aerodynamic or hydrodynamic performance.

One existing method for surface modification involves a technique known as appliqué. An appliqué is a technique in which a sheet, a fabric, or a layer with microtextures formed on it is attached or sewn onto the surface of another. By covering a solid surface with a texture or pattern, frictional forces experienced by the object moving through the fluid is reduced.

One major challenge is that most surfaces, such as aircraft wings or fuselages, are curved and not flat. Aligning these textured appliques on curved surfaces can be difficult. Achieving perfect alignment is difficult, and mismatches can result in wrinkles or misalignments on the surface, which can negatively impact the intended aerodynamic or hydrodynamic performance improvements. The appliques must be precisely sized to match the contours of the curved surface. If the sizing is even slightly off, it can result in overlaps, gaps, or distortions in the applied texture, reducing the effectiveness of the surface modification.

### SUMMARY

In a particular implementation, a method for directly applying surface texture on the surface of a part to reduce drag is provided as per the appended claims 1 to 15.

An illustrative embodiment provides a method for directly applying surface texture on the surface of a part to reduce drag. The method comprises defining a geometry of the surface texture on the surface of the part and generating paths for inkjet printers to move over the surface of the part. The method comprises determining the number of passes and firing schedules for the inkjet printers to create the surface texture. The method comprises locating and aligning the part in a work cell. The method comprises depositing fluid droplets by the inkjet printers onto the surface to create the surface texture.

In an illustrative embodiment, the method further comprises adjusting the size of the fluid droplets in response to input data related to the geometry of the surface texture.

In an illustrative embodiment, the method further comprises firing the fluid droplets to selectively position the fluid droplets on the surface to achieve a desired texture pattern.

In an illustrative embodiment, the surface texture comprises a plurality of riblets formed on the surface. The surface texture can be formed by controlling the size of the fluid droplets. The size of the fluid droplets can be varied to successively smaller droplets to form a textured pattern of riblets on the surface.

In an illustrative embodiment, the method further comprises controlling the movement of the inkjet printer relative to the surface to vary the thickness of the surface texture. The velocity of the inkjet printer can be varied to control the thickness of the surface texture.

In an illustrative embodiment, the inkjet printer comprises a piezoelectric actuator in contact with fluid. The piezoelectric actuator is configured to change shape in response to an electrical pulse applied to the piezoelectric actuator, thereby generating a pressure wave in the fluid, and forcing a controlled amount of fluid out of the inkjet printer as the fluid droplets.

In an illustrative embodiment, the method comprises adjusting the size of the fluid droplets by varying the magnitude and pulse width of the electrical pulse. In an illustrative embodiment, the method comprises adjusting the size of the fluid droplets by varying the magnitude and time period of the electrical pulse.

In an illustrative embodiment, the fluid comprises resin dissolved in a solvent. In an illustrative embodiment, the fluid droplets comprise an ink or a coating material.

In an illustrative embodiment, the method comprises curing the fluid droplets, thereby causing materials in the fluid droplets to polymerize and bond with the surface. In an illustrative embodiment, the method comprises curing the fluid droplets to harden and bond with the surface.

The features, functions, and advantages described herein can be achieved independently in various implementations or may be combined in yet other implementations, further details of which can be found with reference to the following description and drawings.

### BRIEF DESCRIPTION OF THE DRAWINGS

The novel features believed characteristics of the illustrative embodiments are set forth in the appended claims. The illustrative embodiments, however, as well as a preferred mode of use, further objectives and features thereof, will best be understood by reference to the following detailed description of an illustrative embodiment of the present disclosure when read in conjunction with the accompanying drawings, wherein:
**FIG. 1** depicts a system in accordance with an illustrative embodiment;
**FIGS. 2A** and **2B** illustrate fluid droplets to achieve a desired texture;
**FIG. 3** illustrates a technique for creating a desired texture;
**FIGS. 4A, 4B** and **4C** illustrate perspective views of example riblets formed on a surface;
**FIGS. 5A, 5B, 5C** and **5D** illustrate varying the height and width of a surface texture by varying the velocity of an inkjet printer; and
**FIGS. 6** depicts a flowchart illustrating a method of directly applying a surface texture on a surface.

### DETAILED DESCRIPTION

The illustrative embodiments recognize and take into account one or more different considerations. For example, the illustrative embodiments recognize and take into account that most surfaces, such as aircraft wings or fuselages, are curved and not flat. As such, aligning textured appliques on curved surfaces can be difficult. The illustrative embodiments recognize and take into account that achieving perfect alignment on curved surfaces is difficult, and mismatches can result in wrinkles or misalignments on the surface, which can negatively impact the intended aerodynamic or hydrodynamic performance improvements. The illustrative embodiments recognize and take into account that appliqués must be precisely sized to match the contours of the curved surface. If the sizing is even slightly off, it can result in overlaps, gaps, or distortions in the applied texture, reducing the effectiveness of the surface modification.

The illustrative embodiments provide a method and a system for applying surface texture on a solid surface using inkjet printing. In contrast to conventional methods that rely on appliqué techniques, the illustrative embodiments provide direct surface texturing through inkjet printing. The illustrative embodiments offer greater precision and control over the texture application process, especially on complex, curved surfaces.

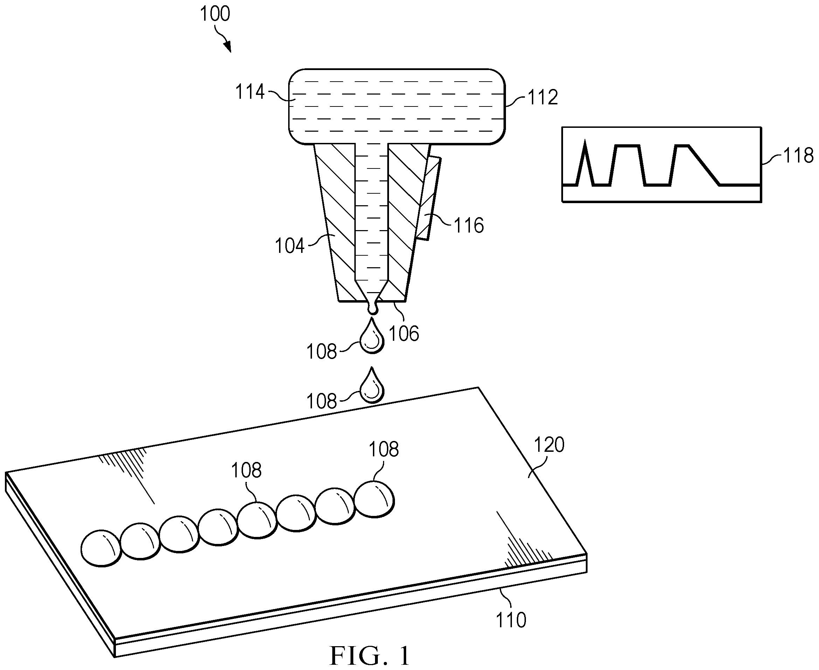

**FIG. 1** depicts system **100** in accordance with an illustrative embodiment. System **100** utilizes an inkjet printer to directly apply a surface texture to a solid surface, thus modifying the surface. The surface modification technique of applying a texture is also known as micro-texturing. The purpose of surface modification by applying a texture is to reduce resistance or skin friction by manipulating the flow of fluids, such as air or water, as it moves over a solid surface. By introducing surface textures, the effective contact area between the fluid and the solid surface is reduced, which in turn reduces friction. This reduction in friction leads to reduced drag which improves aerodynamic or hydrodynamic performance of an object.

System **100** can be used to apply surface textures to a variety of solid surfaces. For example, system **100** can be used to apply surface textures directly on the surface of a wing or a fuselage of an aircraft. Also, system **100** can be used to apply surface textures directly to the hull of a ship.

With reference to **FIG. 1****,** system **100** includes inkjet printer **104** with at least one nozzle **106** for ejecting fluid droplets **108** of a selected material on substrate **110.** Although, in **FIG. 1****,** inkjet printer **104** is shown as having a single nozzle **106,** inkjet printer **104** may include many (e.g., hundreds or thousands) of nozzles.

Inkjet printer **104** includes fluid reservoir **112** which stores fluid **114.** Fluid may comprise an ink, a resin dissolved in a solvent, or any other suitable material. Inkjet printer **104** includes an actuator **116** which may be positioned behind nozzle **106.** Actuator **116** can be in contact with fluid **114.** In response to driving signal **118,** actuator **116** changes shape which generates a pressure wave in fluid **114.** The effect of this pressure wave is that a controlled amount of fluid is forced out as fluid droplets **108** out of nozzle **106.**

In an illustrative embodiment, actuator **116** is a piezoelectric actuator configured to change shape in response to an electrical pulse (e.g., driving signal **118)** applied to actuator **116.** By varying the magnitude and pulse width of the electrical pulse **118,** or magnitude and time period of the electrical pulse **118,** the size of fluid droplets **108** can be adjusted. In other example embodiments, inkjet printer **104** can be a thermal printer or a mechanical printer.

In an illustrative embodiment, substrate **110** may, for example, be a section of an aircraft such as a wing, a fuselage, or a vertical fin. In other embodiments, substrate **110** may be a hull of a ship or a boat.

In an illustrative embodiment, fluid droplets **108** are deposited on substrate **110** to modify solid surface **120** by forming a texture or a pattern on solid surface **120.** The purpose of surface modification by applying a texture or a pattern is to reduce resistance or skin friction by manipulating the flow of fluids, such as air or water, as it moves over solid surface **120.**

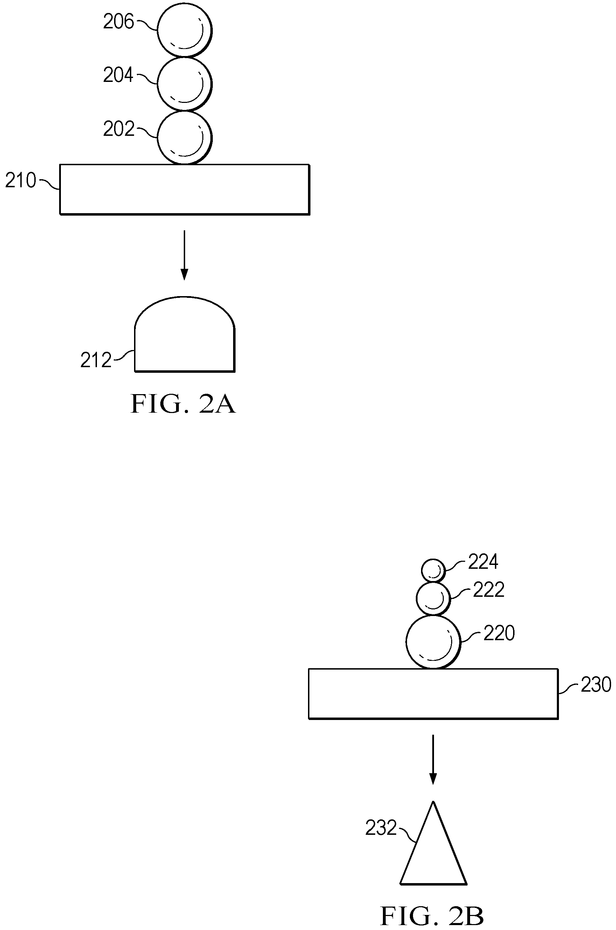

In an illustrative embodiment, the size of the fluid droplets is controlled to achieve a desired texture or a pattern on a substrate. In **FIG. 2A****,** droplets **202, 204** and **206,** which have the same size, are deposited on substrate **210.** Fluid droplet **202** is first deposited, and next fluid droplet **204** is deposited on fluid droplet **202.** The process is repeated until fluid droplet **206** is deposited on fluid droplet **204,** thus building up fluid droplets one on top of the other. The effect of this is that the resulting texture **212** has a mound-shaped profile. In **FIG. 2B****,** fluid droplets **220, 222** and **224,** which have successively smaller size, are deposited on substrate **230.** The effect of this is that the resulting texture **232** has a riblet-shaped profile.

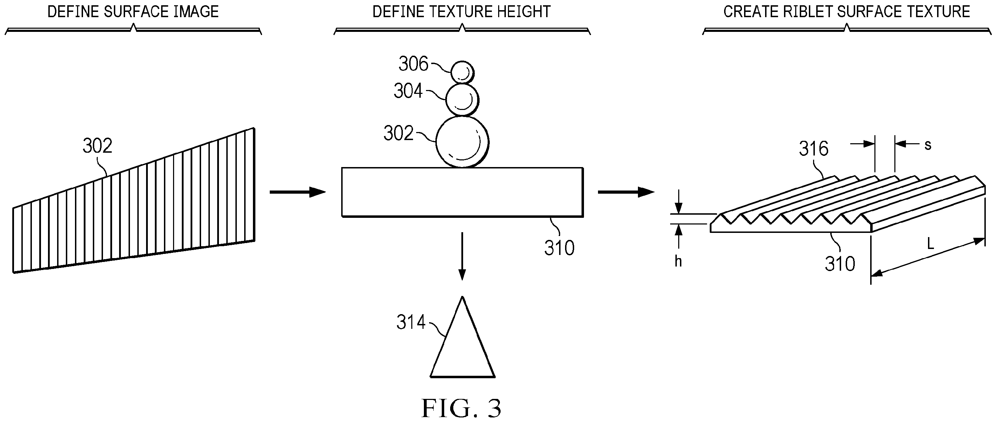

**FIG. 3** illustrates how a desired textured surface on a substrate is created. The process involves depositing material in a layer-by-layer fashion to create a desired textured surface. In an illustrative embodiment, a textured surface comprising riblets is created through inkjet-based manufacturing. Riblets are small, parallel, and regularly spaced ridges or grooves that are molded or etched onto the surface of a substrate. The riblets can vary in size and spacing depending on the desired effect. The riblets are typically oriented in the direction of the desired fluid flow, such as the direction of airflow over an aircraft wing or water flow over a ship's hull.

With reference to **FIG. 3****,** a two-dimensional model such as image **302** which defines the geometry (e.g., input data) of the riblets on a surface is generated. The geometry may define the height, spacing and other attributes of the riblets. The geometry may further define shape, dimensions, curvature and other attributes of the substrate and/or surface onto which the surface texture is applied. A computer-aided-design (CAD) software, for example, can be used to define the geometry. In some examples, geometry is defined by input data processed by inkjet printer **104** to deposit fluid droplets to form the surface texture.

In an illustrative embodiment, a software program, based for example on the input data, interprets the two-dimensional model (e.g., image **302)** and generates a series of instructions including the size of fluid droplets **304, 306** and **308** to create the riblet structure on surface **310.** Inkjet printer **104** (not shown in **FIG. 3****)** follows the instructions to deposit fluid droplets one over another to create the riblet structure on surface **310.** In **FIG. 3****,** fluid droplets **304, 306** and **308** have successively smaller sizes. Thus, fluid droplet **304** is smaller than fluid droplet **302,** and fluid droplet **306** is smaller than fluid droplet **304.** Fluid droplets **304, 306** and **308** are built one on top of another by repeating the process. By depositing successively smaller fluid droplets, riblet **314** acquires a triangular-shaped profile.

To create a textured surface on the entire surface **310,** the software program, based for example on the input data, calculates the optimal velocity at which to move inkjet printer **104** during the deposition process. The velocity may be adjusted based on factors like the fluid droplet's viscosity and the height of the desired texture. Optionally, the velocity may be also adjusted based on the input data, defining the geometry of the surface texture (e.g., riblets) and/or the geometry of the surface **310** Initially, inkjet printer **104** moves to a starting position. Then, it ejects fluid droplets of material according to the predetermined pattern. The velocity of the inkjet printer is controlled, and the process is repeated until small, parallel, and regularly spaced riblets **316** are molded on surface **310.**

In an illustrative embodiment, after the deposition, the fluid droplets are cured, thus allowing the material in the fluid droplets to polymerize and bond with the surface. The material may include ink, resin, or any other suitable material. Alternatively, the fluid droplets are cured, thus allowing the material in the fluid droplets to harden and bond with the surface.

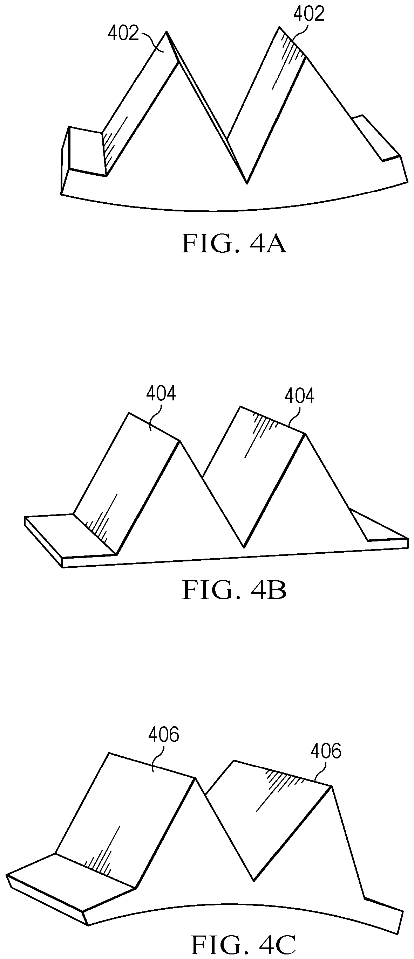

**FIGS. 4A, 4B** and **4C** illustrate perspective views of example riblets formed on a surface in accordance with illustrative embodiments. In **FIG. 4A****,** riblets **402** have a peak-to-peak spacing of 9.3283 mm, in **FIG. 4B****,** riblets **404** have a peak-to-peak spacing of 10.0 mm, and in **FIG. 4C****,** riblets **406** have a peak-to-peak spacing of **11.7859** mm. Depending on the surface onto which the riblets are created, the drag reduction performance of the riblets varies depending on the peak-to-peak spacing of the riblets. In an example embodiment, a laser scanner or a stereoscopic camera can be used to scan, for example, a vertical fin or a wing of an aircraft and generate images (e.g., input data). A software program interprets the images, for example based on the input data, and computes the optimal geometry and placement of the riblets to be formed on the surface of a part in order to maintain desired peak-to-peak spacing. In an example embodiment, a wing, or a vertical fin of an aircraft, for example, is scanned (e.g., to create the input data) and a software program computes, for example based on the input data, the geometry of the riblets based on the scanned images to maintain a desired peak-to-peak spacing (e.g., 10 mm) to achieve desired aerodynamic results.

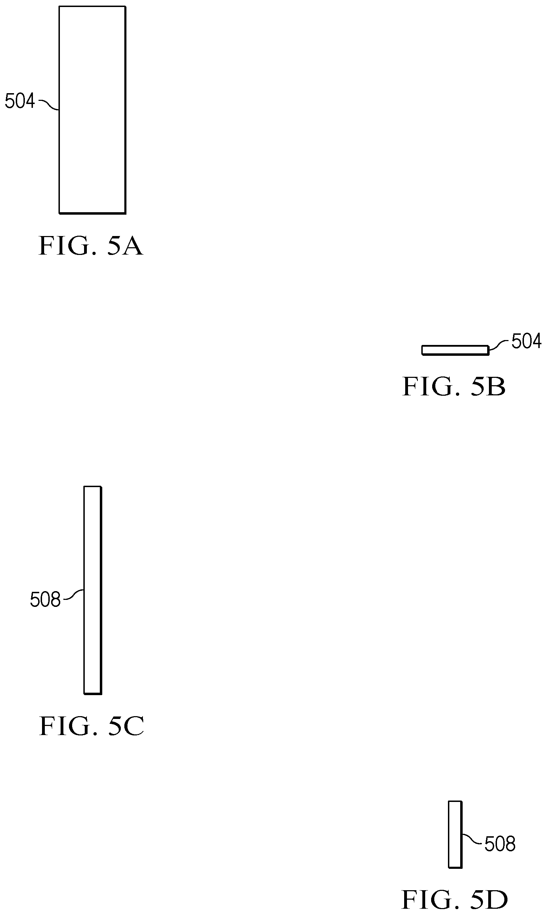

In illustrative embodiments, the height, and the width of texture features (e.g., riblets) formed in each pass on a surface are varied by adjusting the speed of an inkjet printer relative to the surface. Slower speed yields taller texture features while faster speed yields shorter texture features. In **FIG. 5A** and **5B****,** an inkjet printer (not shown in **FIGS. 5A** and **5B****)** moves at a speed of 6 in/sec (15.24 cm/sec) over a surface in a single pass. **FIG. 5A** illustrates a top view of a resulting texture **504** which has width of 0.18 inches (4.572 mm), and **FIG. 5B** illustrates a cross-sectional view of texture **504** which has a height of 10 micron.

In **FIG. 5C** and **5D****,** the inkjet printer moves at a speed of 1 in/sec (2.54 cm/sec) over the surface in a single pass. **FIG. 5C** illustrates a top view of a resulting texture **508** which has width of 0.03 inches (0.762 mm), and **FIG. 5D** illustrates a cross-sectional view of texture **508** which has a height of 60 micron.

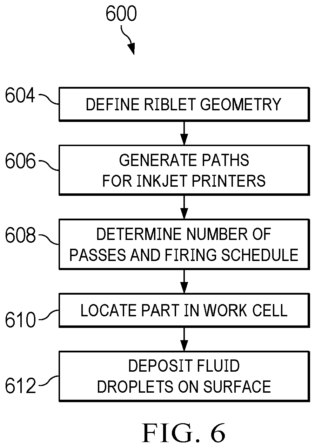

**FIG. 6** depicts flowchart **600** of a method of directly applying a surface texture on a surface in accordance with the illustrative embodiments. In an illustrative embodiment, the surface texture comprises riblets which are created through inkjet-based manufacturing. Riblets are small, parallel, and regularly spaced ridges or grooves that are molded or etched onto a surface. The riblets can vary in size and spacing depending on the desired effect. The riblets are typically oriented in the direction of the desired fluid flow, such as the direction of airflow over an aircraft wing or water flow over a ship's hull.

Process **600** starts with defining a riblet geometry of the surface of a part (step **604),** which may be defined, for example by input data. The part, for example, may be a wing or a fuselage segment of an aircraft that requires riblet application. A computer-aided-design (CAD) software, for example, can be used to define the geometry. In some examples, geometry is defined by input data processed by inkjet printer **104** to deposit fluid droplets to form the surface texture.

In an example embodiment, a software program, based for example on the input data, interprets the geometry and generates paths for inkjet printers to move over the part to cover a desired area for riblet application (step **606).** The software program may generate, for example based on input data, paths or grid which is optimized to achieve the specific riblet pattern on the surface of the part and to ensure complete coverage of the surface. The inkjet printers may be held or retained by an automation system which may include one or more robots that precisely control the movement of the inkjet printers. This controlled motion ensures even and consistent riblet application across the entire surface.

Based on the size and shape of the riblets, the number of passes required to achieve the desired geometry and nozzle firing schedules are determined by the software program (step **608).** For example, for a given fluid material if a print head of an inkjet printer puts down or deposits 10 um per pass and needs to create a 30 um tall riblet with a triangular profile, the desired riblet can be created in three passes with smaller fluid droplets used on each successive pass. This process is illustrated in **FIG. 2B** where fluid droplets **220, 222** and **224,** which have successively smaller size, are deposited on a surface to create a riblet.

The part is then located in a work cell relative to the inkjet printers (step **610).** In an example embodiment, the part can be aligned with the inkjet printers using a laser tracker alignment system or a robot-mounted vision system. With the part in place and inkjet printers ready, the riblet deposition process begins (step **612).** The inkjet printers deposit fluid droplets directly onto the surface of the part. These droplets create the desired riblet pattern, which reduces aerodynamic drag.

As used herein, the phrase "a number" means one or more. The phrase "at least one of', when used with a list of items, means different combinations of one or more of the listed items may be used, and only one of each item in the list may be needed. In other words, "at least one of" means any combination of items and number of items may be used from the list, but not all of the items in the list are required. The item may be a particular object, a thing, or a category.

For example, without limitation, "at least one of item A, item B, or item C" may include item A, item A and item B, or item C. This example also may include item A, item B, and item C or item B and item C. Of course, any combination of these items may be present. In some illustrative examples, "at least one of" may be, for example, without limitation, two of item A; one of item B; and ten of item C; four of item B and seven of item C; or other suitable combinations.

The flowcharts and block diagrams in the different depicted embodiments illustrate the architecture, functionality, and operation of some possible implementations of apparatuses and methods in an illustrative embodiment. In this regard, each block in the flowcharts or block diagrams may represent at least one of a module, a segment, a function, or a portion of an operation or step. For example, one or more of the blocks may be implemented as program code.

In some alternative implementations of an illustrative embodiment, the function or functions noted in the blocks may occur out of the order noted in the figures. For example, in some cases, two blocks shown in succession may be performed substantially concurrently, or the blocks may sometimes be performed in the reverse order, depending upon the functionality involved. Also, other blocks may be added in addition to the illustrated blocks in a flowchart or block diagram.

The description of the different illustrative embodiments has been presented for purposes of illustration and description and is not intended to be exhaustive or limited to the embodiments in the form disclosed. The different illustrative examples describe components that perform actions or operations. In an illustrative embodiment, a component may be configured to perform the action or operation described. For example, the component may have a configuration or design for a structure that provides the component an ability to perform the action or operation that is described in the illustrative examples as being performed by the component. Many modifications and variations will be apparent to those of ordinary skill in the art. Further, different illustrative embodiments may provide different features as compared to other desirable embodiments. The embodiment or embodiments selected are chosen and described in order to best explain the principles of the embodiments, the practical application, and to enable others of ordinary skill in the art to understand the disclosure for various embodiments with various modifications as are suited to the particular use contemplated.

The disclosure further provides the non-limiting examples according to the following Clauses:
Clause 1: A method for creating riblets on the surface of a part to reduce drag, comprising:
   defining a geometry of the riblets on the surface of the part;
   generating paths for inkjet printers to move over the surface of the part;
   determining the number of passes and firing schedules for the inkjet printers to create the riblets;
   locating and aligning the part in a work cell; and
   depositing fluid droplets by the inkjet printers onto the surface to create the riblets.
Clause 2: The method of Clause 1, wherein the inkjet printer comprises a piezoelectric actuator in contact with fluid, and wherein the piezoelectric actuator is configured to change shape in response to an electrical pulse applied to the piezoelectric actuator, thereby generating a pressure wave in the fluid and forcing a controlled amount of fluid as the fluid droplets out of the inkjet printer.
Clause 3: The method of Clause 1, further comprising varying the size of the fluid droplets to successively smaller droplets; and creating the riblets on the surface.
Clause 4: The method of Clause 1, further comprising controlling the movement of the inkjet printer relative to the surface to vary the thickness of the riblets.
Clause 5: The method of Clause 4, wherein the velocity of the inkjet printer is varied to control the thickness of the riblets.
Clause 6: A method for applying surface texture on the surface of a part to reduce drag, comprising:
   defining a geometry of the surface texture on the surface of the part;
   generating paths for inkjet printers to move over the surface of the part;
   determining the number of passes and firing schedules for the inkjet printers to create the surface texture;
   locating and aligning the part in a work cell;
   adjusting the size of the fluid droplets in response to input data related to the geometry of the surface texture;
   firing the fluid droplets to selectively position the fluid droplets on the surface to achieve a desired texture pattern; and
   controlling the movement of the inkjet printers relative to the surface to vary the thickness of the surface texture.
Clause 7: The method of Clause 6, wherein the surface texture comprises a plurality of riblets.
Clause 8: The method of Clause 6, further comprising: varying the size of the fluid droplets to successively smaller droplets; and forming a textured pattern of riblets on the surface.

## Claims

1. A method for directly applying surface texture on the surface of a part to reduce drag, comprising:
defining a geometry (604) of the surface texture on the surface of the part;
generating paths (606) for inkjet printers (104) to move over the surface of the part;
determining the number of passes and firing schedules (608) for the inkjet printers (104) to create the surface texture;
locating and aligning (610) the part in a work cell; and
depositing (612) fluid droplets (108) by the inkjet printers (104) onto the surface to create the surface texture.

2. The method of claim 1, further comprising adjusting the size of the fluid droplets (108) in response to input data related to the geometry of the surface texture.

3. The method of claim 1 or 2, further comprising firing the fluid droplets (108) to selectively position the fluid droplets (108) on the surface to achieve a desired texture pattern.

4. The method of any one of claims 1 to 3, wherein the surface texture is formed by controlling the size of the fluid droplets (108).

5. The method of any one of claims 1 to 4, further comprising controlling the movement of the inkjet printer (104) relative to the surface to vary the thickness of the surface texture.

6. The method of claim 5, wherein the velocity of the inkjet printer (104) is varied to control the thickness of the surface texture.

7. The method of any one of claims 1 to 6, wherein the surface texture comprises a plurality of riblets (316) formed on the surface (310).

8. The method of any one of claims 1 to 7, further comprising:
varying the size of the fluid droplets (302, 304, 306) to successively smaller droplets; and
forming a textured pattern of riblets (316) on the surface (310).

9. The method of any one of claims 1 to 8, wherein the inkjet printer (104) comprises a piezoelectric actuator (116) in contact with fluid (114), and wherein the piezoelectric actuator (116) is configured to change shape in response to an electrical pulse (118) applied to the piezoelectric actuator (116), thereby generating a pressure wave in the fluid (114) and forcing a controlled amount of fluid (114) out of the inkjet printer (104) as the fluid droplets (108).

10. The method of claim 9, further comprising adjusting the size of the fluid droplets (108) by varying the magnitude and pulse width of the electrical pulse (118).

11. The method of claim 9, further comprising adjusting the size of the fluid droplets (108) by varying the magnitude and time period of the electrical pulse (118).

12. The method of any one of claims 9 to 11, wherein the fluid (114) comprises resin dissolved in a solvent.

13. The method of any one of claims 1 to 11, wherein the fluid droplets (108) comprise an ink or a coating material.

14. The method of any one of claims 1 to 13, further comprising curing the fluid droplets (108), thereby causing materials in the fluid droplets (108) to polymerize and bond with the surface.

15. The method of any one of claims 1 to 13, further comprising curing the fluid droplets (108) to harden and bond with the surface.
